Europäisches Patentamt

European Patent Office

Office européen des brevets

(19)

(11) Veröffentlichungsnummer : **0 052 717**
**B1**

(12) **EUROPÄISCHE PATENTSCHRIFT**

(45) Veröffentlichungstag der Patentschrift :
09.07.86

(21) Anmeldenummer : 81107693.4

(22) Anmeldetag : 28.09.81

(51) Int. Cl.⁴ : **F 24 D 3/10, F 16 L 41/02**

(54) Heizungsverteiler.

(30) Priorität : **21.11.80 DE 3043986**

(43) Veröffentlichungstag der Anmeldung :
**02.06.82 Patentblatt 82/22**

(45) Bekanntmachung des Hinweises auf die Patenterteilung : **09.07.86 Patentblatt 86/28**

(84) Benannte Vertragsstaaten :
**AT BE CH FR GB IT LI LU NL SE**

(56) Entgegenhaltungen :
**EP-A- 0 035 642**
**BE-A- 776 485**
**DE-A- 2 829 216**

(73) Patentinhaber : **PVG-Patentverwertungsgeselischaft mbH**
**Zülpicher Strasse 70**
**D-5164 Nörvenich (DE)**

(72) Erfinder : **Haugeneder, Hans**
**Unterer Markt 8**
**A-3335 Weyer (AT)**

(74) Vertreter : **Reinhard, Skuhra, Weise**
**Leopoldstrasse 51**
**D-8000 München 40 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft einen Heizungsverteiler gemäß dem Oberbegriff des Patentanspruchs 1.

Ein Heizungsverteiler gemäß dem Oberbegriff des Patentanspruchs 1 ist aus der EP-A-35 642 bekannt. Dieser Heizungsverteiler besteht aus einer Vorlaufkammer und einer Rücklaufkammer, wobei Vor- und/Rücklaufkammer von Ventilstößeln durchsetzt werden, die zum Verschließen von an der Unterseite des Heizungsverteilers angeordneten Anschlüssen für Vorlauf und Rücklauf dienen.

Der Erfindung liegt die Aufgabe zugrunde, einen Heizungsverteiler der eingangs genannten Art derart zu verbessern, daß er bei einfachem Aufbau den Einsatz von Stellmotoren für die Ventile ermöglicht und platzsparend einsatzfähig ist.

Diese Aufgabe wird erfindungsgemäß durch die Merkmale des kennzeichnenden Teils des Patentanspruchs 1 gelöst.

Weitere Ausgestaltungen des Heizungsverteilers ergeben sich aus den Unteransprüchen.

Vorteilhafterweise lassen sich bei dem Heizungsverteiler zur Regelung des Vorlaufes und des Rücklaufes Ventile gleicher Konstruktion in den Ventilabschnitten einsetzen, so daß die Durchführung von Ventilstößeln durch die Vorlauf- und Rücklaufkammer entfällt.

Bei dem Heizungsverteiler sind die Ventile von der Oberseite des Verteilers her eingesetzt, so daß bei Verwendung von Stellmotoren zur Verstellung der Ventile die Stellmotoren auf der Oberseite des Heizungsverteilers befestigbar sind. Der Einsatz des Heizungsverteilers in Kombination mit Stellmotoren erfordert damit keine Mauernischen mit relativ großer Tiefe, sondern lediglich eine Mauernische angemessener Höhe. Der Einsatz dieser Heizungsverteiler wird damit dann nicht beeinträchtigt, wenn die Tiefe von Mauernischen begrenzt ist.

Die Ventilabschnitte zur Aufnahme der Ventile sind bei dem Heizungsverteiler auf der Oberseite angeordnet, während die Anschlüsse für die Rohre der Heizkreise an der Unterseite des Heizungsverteilers ausgebildet sind. Jeder Heizungsverteiler besteht aus einer beliebigen Zahl von Verteilergruppen, von denen eine Verteilergruppe zur Vorlaufregelung und eine Verteilergruppe zur Rücklaufregelung ausgelegt ist und ein Heizungsverteiler somit aus wenigstens zwei Verteilergruppen zusammengesetzt ist. Die Zahl der Verteilergruppen läßt sich entsprechend der Zahl der erforderlichen Vorlauf- und Rücklaufanschlüsse wählen.

Jeder Ventilabschnitt enthält einen Ventilsitz, wodurch an sich bekannte Ventiloberteile verwendbar sind. Vorteilhafterweise können Ventile ohne Ventilsitz Einsatz finden, da der Ventilsitz im jeweiligen Ventilabschnitt des Heizungsverteilers direkt ausgebildet ist und mit dem Ventilteller oder Ventilkörper des zu montierenden Ventiles zusammenwirkt.

Im folgenden werden bevorzugte Ausführungsformen des Heizungsverteilers anhand der Zeichnungen näher beschrieben. Es zeigen :

Figur 1   eine Schnittansicht durch zwei Verteilergruppen eines Heizungsverteilers, wobei die eine Verteilergruppe im Schnitt entlang der Linie I-I in Fig. 2 und die andere Verteilergruppe einem Schnitt entlang der Linie II-II in Fig. 3 dargestellt ist,

Figur 2   eine Querschnittsansicht einer ersten Verteilergruppe nach Fig. 1,

Figur 3   eine Schnittansicht einer zweiten Verteilergruppe von Fig. 1,

Figur 4   eine Draufsicht auf zwei Verteilergruppen eines Heizungsverteilers mit seitlichem Abschlußelement, und

Figur 5   eine Stirnseitenansicht eines Heizungsverteilers mit Abschlußelement.

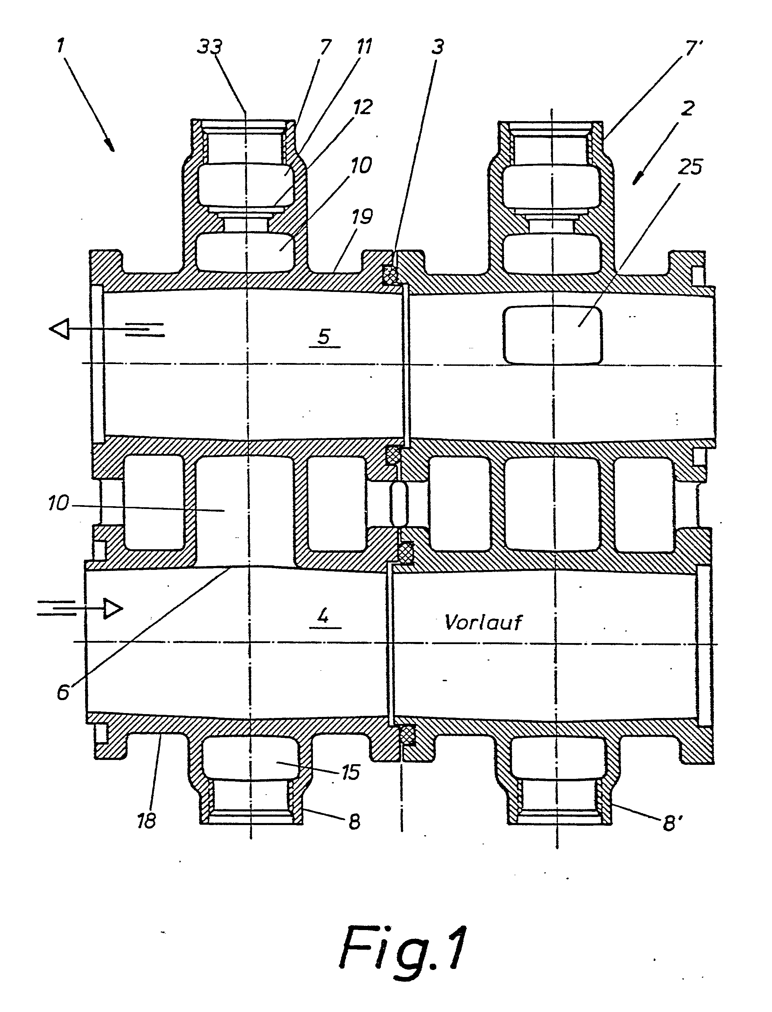

Im folgenden werden bevorzugte Ausführungsformen eines erfindungsgemäßen Heizungsverteilers unter Bezugnahme auf die Fig. 1 bis 5 näher erläutert.

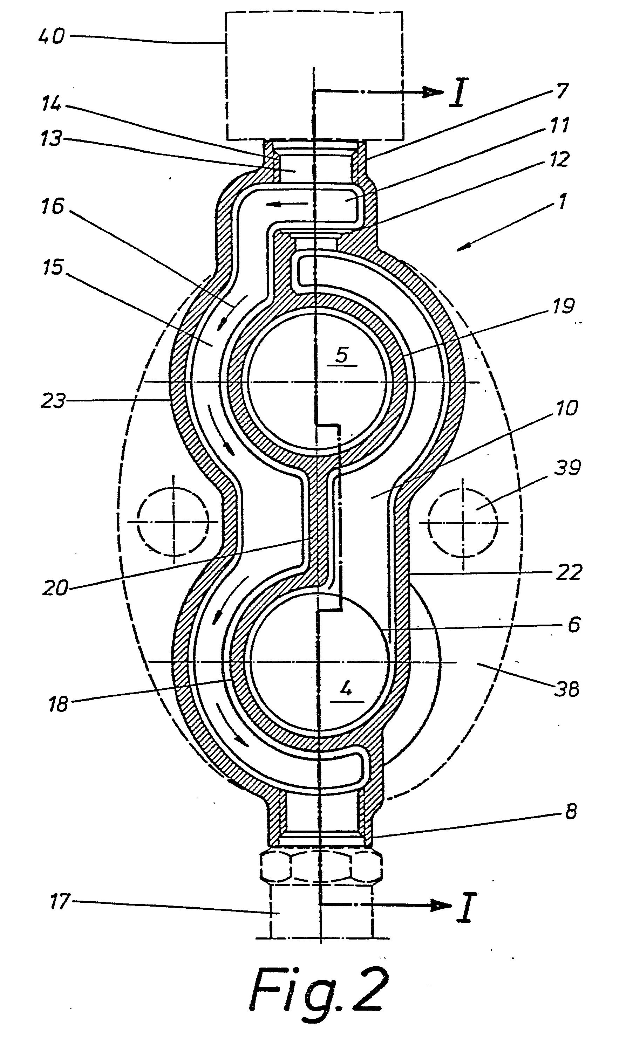

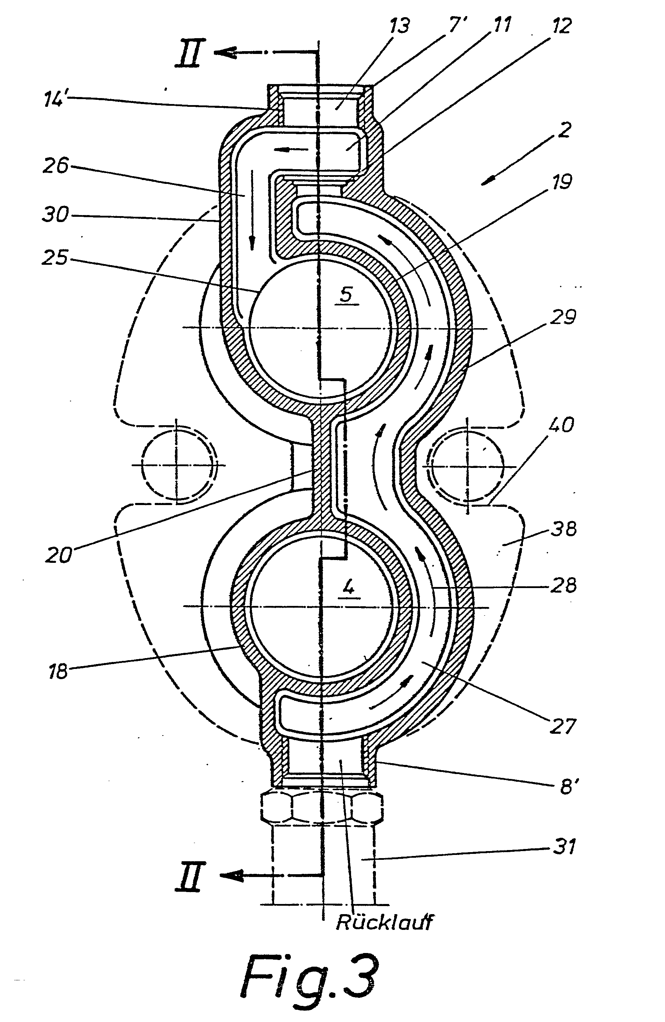

Der erfindungsgemäße Heizungsverteiler besteht aus einer beliebigen Zahl von Verteilergruppen. Unter Bezugnahme auf Fig. 1 werden zwei nebeneinanderliegende Verteilergruppen 1 und 2 erläutert, die in schematischer Schnittdarstellung veranschaulicht sind. Die Verteilergruppe 1 ist in einem Schnitt dargestellt, der entlang der Linie I-I in Fig. 2 angedeutet ist, während die Verteilergruppe 2 einem Schnitt entlang der Linie II-II in Fig. 3 entspricht. Die beiden, nebeneinanderliegenden Verteilergruppen 1, 2 sind unter Einschluß einer Dichtung oder Dichtungsringen 3 aneinandergesetzt und weisen jeweils eine Vorlaufkammer 4 und eine Rücklaufkammer 5 auf. Durch den Einsatz der Dichtung 3 ist eine flüssigkeitsdichte Verbindung zwischen den Vorlaufkammern 4 sowie zwischen den Rücklaufkammern 5 beider Verteilergruppen gegeben.

Die Vorlaufkammern 4 und die Rücklaufkammern 5 haben im wesentlichen rohrförmigen Querschnitt, wie die Fig. 2 und 3 zeigen und sind vorzugsweise etwa in der Mitte ihrer Länge mit einer Öffnung 6 (Fig. 2) bzw. mit einer Öffnung 7 versehen, die von der Vorlaufkammer 4 bzw. der Rücklaufkammer 5 jeder Verteilergruppe zu einem noch näher beschriebenen Kanal für das den Heizungsverteiler durchströmende Medium führt. Bei der in den Fig. 1 bis 3 dargestellten Ausführungsform liegen die beiden Vorlauf- und Rücklaufkammern 4, 5 unter Einhaltung eines Abstandes vertikal übereinander. An der Oberseite jeder Verteilergruppe 1, 2 befindet sich vorzugsweise auf der durch die Mitte der Vorlauf- und Rücklaufkammern 4,5 gehenden Mittellinie ein Abschnitt 7 zur Aufnahme eines Ventils, während auf der gegenüberliegenden Seite ein Anschluß 8 zur Befestigung der zu Heizkreisen führenden Rohre vorgesehen ist.

Einzelheiten der beiden Verteilergruppen 1 und 2 werden nunmehr unter Bezugnahme auf Fig. 2 und 3 beschrieben. Die in Fig. 2 dargestellte Verteilergruppe 1 ist derart konzipiert, daß der Vorlauf durch ein im Abschnitt 7 angeordnetes Ventil regelbar ist. Von der Vorlaufkammer 4 führt die Öffnung 6 zu einem Kanal 10, der sich von der Vorlaufkammer 4 nach oben und seitlich an der Rücklaufkammer 5 vorbei in den Ventilabschnitt 7 erstreckt. Der Kanal 10 mündet in einen Hohlraum 11, der gegenüber der Dimension des Kanales 10 erweitert ist und dadurch einen Schulterabschnitt 12 definiert, der als Ventilsitz dienen kann. Vom Hohlraum 11 geht eine zylindrische Bohrung 13 in Vertikalrichtung nach oben und ist mit einem Innengewinde 14 zur Aufnahme eines Ventiloberteiles versehen. Durch das nicht dargestellte Ventil kann damit die Strömung vom Kanal 10 in den Hohlraum 11 geregelt werden. Vom Hohlraum 11 strömt das Medium über einen weiteren Kanal 15 seitlich an der Rücklaufkammer 5 nach unten entlang dem in Fig. 2 durch Pfeile 16 gezeigten Weg, wird an der Vorlaufkammer 4 ebenfalls seitlich nach unten vorbeigeführt und gelangt zum Anschlußstück 8. Von dort wird das Medium über ein Rohr 17 in den Heizkreis geleitet.

Die Wandungen der Vorlaufkammer 4 bzw. Rücklaufkammer 5 sind in Fig. 2 mit 18 bzw. 19 bezeichnet. Die Wandungen 18 und 19 sind über einen Wandabschnitt 20 miteinander verbunden, der im wesentlichen in vertikaler Richtung verläuft und in dem zwischen der Vorlaufkammer 4 und der Rücklaufkammer 5 liegenden Bereich der Verteilergruppe 1 den Kanal 10 gegenüber dem Kanal 15 trennt. Der Kanal 10 weist im übrigen eine nach außen weisende Wandfläche 22 und der Kanal 15 eine nach außen weisende Wandfläche 23 auf.

Auf vorstehende Weise wird in der Verteilergruppe 1 eine Strömung von der Vorlaufkammer 4 über den Kanal 10, den Ventilabschnitt 7 und über den Kanal 15 zum Anschlußstück 8 festgelegt, wobei der Ventilabschnitt 7 an seiner Oberseite durch den nicht dargestellten, eingeschraubten Ventilkörper abgeschlossen ist. Das in den Ventilabschnitt 7 einzusetzende Ventil wird vorzugsweise über einen Elektromotor oder dergleichen betätigt, der oberhalb des Ventilabschnittes 7 liegt und über dem Ventilkörper am Ventilabschnitt 7 befestigt sein kann.

Die in Fig. 3 dargestellte Verteilergruppe 2 hat im Grunde genommen den gleichen Aufbau wie die Verteilergruppe 1, dient jedoch zur Regelung der Rücklaufströmung. Gleiche Teile gegenüber Fig. 2 sind in Fig. 3 mit gleichen Bezugszeichen versehen. Die Vorlaufkammer 4 wird durch eine Wandung 18 gebildet und die Rücklaufkammer 5 durch eine Wandung 19. In der Vorlaufkammer 4 ist etwa in mittiger Anordnung gemäß Fig. 1 eine Öffnung 25 vorgesehen, die von der Rücklaufkammer 5 zu einem Kanal 26 führt. Von dem an der Unterseite d. h. an der dem Ventilabschnitt 7' gegenüberliegenden Seite der Verteilergruppe 2 liegenden Anschlußstück 8' führt ein Kanal 27 unter seitlicher Umgehung der Vorlaufkammer 4 nach oben entlang eines Weges, der durch einen Pfeil 28 angedeutet ist, wobei der Kanal 27 auch an der Rücklaufkammer 5 vorbei nach oben führt und in den Hohlraum 11 mündet. Der Kanal 26 verbindet den Hohlraum 11 mit der Rücklaufkammer 5. Der Kanal 27 der Verteilergruppe 2 verläuft ebenso wie der Kanal 15 der Verteilergruppe 1 zwischen dem Ventilabschnitt und dem Rohranschlußstück, während der zweite Kanal 26 der Verteilergruppe 2 wesentlich kürzer als der Kanal 10 der Verteilergruppe 1 ist, da der Kanal 26 nur eine vergleichbar kurze Verbindung zwischen dem Hohlraum 11 und der oben liegenden Rücklaufkammer 5 zu ergeben hat. Die Außenwandung des Kanales 27 ist mit 29 bezeichnet und die Außenwandung des Kanales 26 mit 30. Am Anschlußstück 8 ist auf bekannte Weise ein Rohr 31 angeschraubt.

Die Verteilergruppe 1 zur Regelung der Vorlaufströmung und die Verteilergruppe 2 zur Regelung der Rücklaufströmung haben somit gemeinsam, daß ihr Ventilabschnitt 7 bzw. 7' jeweils an der oberen Seite und die Anschlußstücke 8 bzw. 8' an der Unterseite positioniert sind. Während bei der Verteilergruppe 1 die Anordnung eines motorgesteuerten Ventils bevorzugt wird, wird in der Verteilergruppe 2 ein manuell verstellbares Ventil im Ventilabschnitt 7' vorgesehen, das gegebenenfalls auch durch ein motorgesteuertes Ventil ersetzbar ist. Durch die Möglichkeit, die motorgesteuerten Ventile oder manuell regelbaren Ventile an der Oberseite der Verteilergruppen 1, 2 vorzusehen und die Heizungsrohre an der Unterseite der Verteilergruppen anzuschließen, ergibt sich eine optimale Ausnutzung des üblicherweise oberhalb und unterhalb der Heizungsverteiler vorhandenen Platzes, infolgedessen die auf Schwierigkeiten und Raumnot stoßende seitliche Anordnung von Stell- oder Steuereinheiten für die Ventile vermieden wird. Bei entsprechender Ausbildung des Hohlraumes 11 mit der den Ventilsitz bildenden Schulter 12 können erfindungsgemäß handelsübliche Ventiloberteile in die Ventilabschnitte 7 bzw. 7' eingesetzt werden.

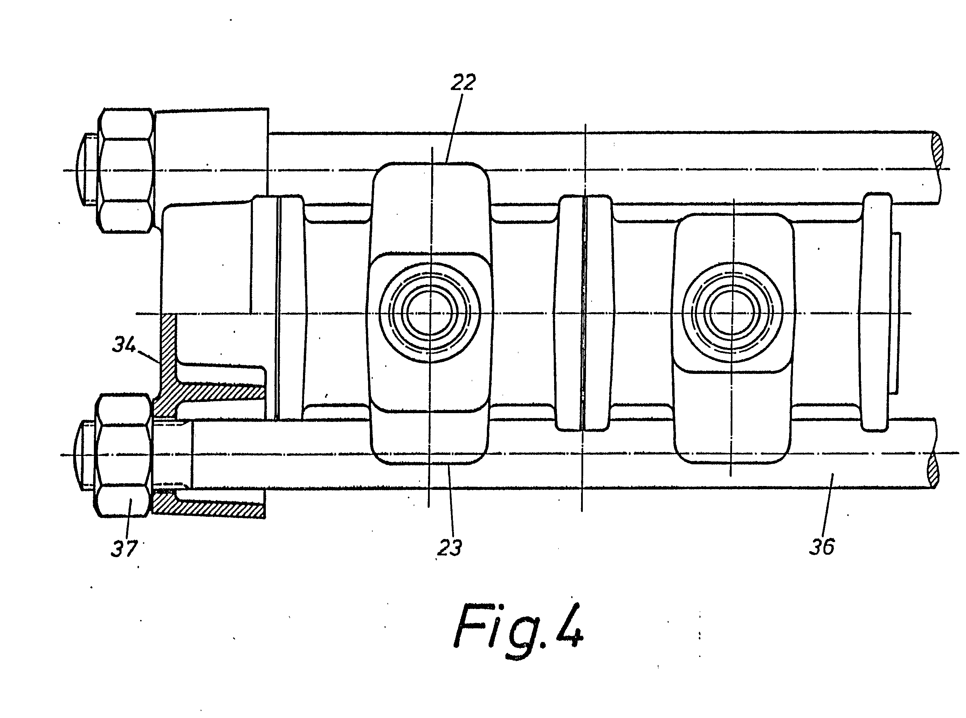

Aus Fig. 4 ist ersichtlich, daß die Kanäle 10 und 15 wulstförmig um die Vorlauf- und Rücklaufkammer 4, 5 verlaufende Abschnitte ergeben, deren Wandflächen 22, 23 in der Draufsicht nach Fig. 4 erkennbar sind. Bei der Verteilergruppe 1 verläuft nach Fig. 2 der erste Kanal 10 von der Vorlaufkammer 4 rechts der Mittellinie nach oben zum Ventilabschnitt 7 und der zweite Kanal 15 links von der Mittellinie nach unten zum Anschlußstück 8, wobei die Form der Kanäle 10 und 15 dem Verlauf der Wandungen 19 und 18 und der Verbindungswandung 20 entspricht, d. h. die Kanäle 10 und 15 verlaufen teilweise gerade neben der Wandung 20 und etwa halbkreisförmig seitlich der Vorlaufkammer 4 bzw. Rücklaufkammer 5. Entsprechendes gilt für die Verteilergruppe 2 nach Fig. 3. Der Kanal 10 ist in Fig. 1 ebenfalls angedeutet und liegt auf einer vertikalen Mittellinie 33 in vertikaler Flucht zu dem Anschlußstück 8 und dem Ventilabschnitt 7. Der Kanal 15 mit seiner Öffnung 25 der Verteilergruppe 2 liegt in gleicher vertikaler Ebene wie der Ventilabschnitt 7' und das Anschlußstück 8'.

Abhängig von der Zahl der notwendigen Vorlauf- und Rücklaufanschlüsse kann die Zahl der Verteilergruppen 1 und 2 nahezu beliebig vergrößert werden, wobei nach vorstehender Beschreibung jeweils eine Verteilergruppe 1 für die Regelung der Vorlaufströmung und eine Verteilergruppe 2 für die Regelung einer Rücklaufströmung jedes Heizkreises erforderlich sind. Der Abschluß der Stirnseiten derjenigen Verteilergruppen, die die Enden eines Heizungsverteilersbilden, erfolgt durch ein Abschlußelement, vorzugsweise einer Abschlußplatte 34. Wenn der Anschluß eines aus mehreren Verteilergruppen 1, 2 bestehenden Heizungsverteilers gegenüber den Vorlauf- und Rücklaufrohrleitungen nur an einer Seite des Heizungsverteilers erwünscht ist, weist die betreffende Abschlußplatte 34 jeweils einen Anschluß für Vorlauf une einen Anschluß für Rücklauf auf. Die Anschlußplatten 34 können jedoch auch nur jeweils einen Anschluß für eine Vorlaufrohrleitung oder Rücklaufrohrleitung haben, so daß auf der einen Seite des Heizungsverteilers jeweils nur eine Anschluß für eine Rohrleitung vorgesehen werden kann. Die Befestigung der einzelnen Verteilergruppen 1, 2 erfolgt vorzugsweise über Muttern und Bolzen. Zu diesem Zweck weisen die beiden stirnseitigen Abschlußplatten 34 Abschnitte 35 mit Öffnungen zur Durchführung von Bolzen 36 auf. An der einen Stirnseite des Heizungsverteilers werden auf die Bolzen 36 Muttern 37 aufgeschraubt, die auf der Abschlußplatte 4 bzw. dem Abschnitt 35 aufliegen. Um eine gegenseitige Ausrichtung zwischen den einzelnen Verteilergruppen 1 und 2 zu gewährleisten, kann jede Verteilergruppe mit einem seitlichen Flanschteil 38 versehen sein, das in Fig. 2 und 3 angedeutet ist und entweder eine Bohrung 39 zur Durchführung eines Bolzens 36 oder eine dem Durchmeser des Bolzens 36 entsprechende Aussparung 40 enthält. Durch Festziehen der Muttern 37 werden die einzelnen Verteilergruppen 1, 2 aneinandergehalten und sind aufgrund der zwischen den einzelnen Verteilergruppen liegenden Dichtungen 3 abgedichtet.

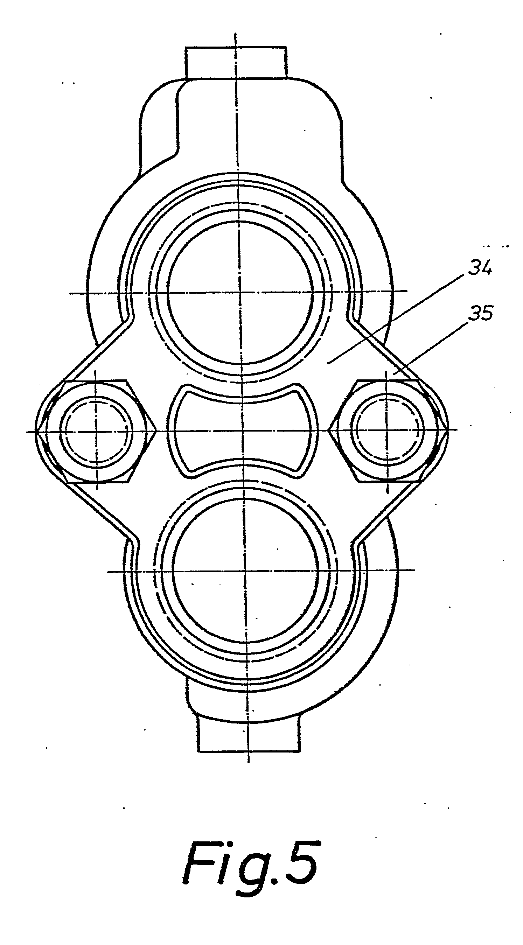

Die Verteilergruppen 1, 2 können aus Kunststoff oder Metall hergestellt werden. Probleme aufgrund einer Wärmeausdehnung ergeben sich bei derartigen Heizungsverteilern praktisch nicht, da das durch sie geführte Medium vergleichbar geringe Temperaturen bis maximal etwa 50 °C hat. Aus diesem Grund ist die Herstellung solcher Verteilergruppen aus Kunststoff ohne weiteres möglich. Die Abschlußplatten 34 werden dagegen vorzugsweise aus Metall hergestellt, um beim Einsatz von beispielsweise nur zwei Bolzen 36, die nach Fig. 5 seitlich und symmetrisch zur Mittellinie der Verteilergruppen liegen, eine exakte Abdichtung der Öffnungen zu den Vorlauf- und Rücklaufkammern 5 zu gewährleisten.

Bei dem erfindungsgemäßen Heizungsverteiler ist es damit ohne weiteres möglich, bei Einsatz von Ventilen gleicher Konstruktion und gleicher Abmessung Stellmotore vorzusehen, die auf der Oberseite der Verteilergruppen über den Ventilabschnitten positioniert werden. Fig. 2 zeigt schematisch einen über dem Ventilabschnitt 7 sitzenden Stellmotor, der mit 40 bezeichnet ist, wobei Einzelheiten der Verbindung zwischen dem Stellmotor 40 und dem nicht dargestellten Ventilkörper oder Ventilstößel des in den Abschnitt 7 eingesetzten Ventils nicht wiedergegeben sind.

Wie aus Vorstehendem ersichtlich, besteht jeder Heizungsverteiler aus einer gleichen Zahl von Verteilergruppen 1 wie aus Verteilergruppen 2, d. h. daß die Verteilergruppen 1 und 2 jeweils paarweise nebeneinanderliegend vorzusehen sind und jedem Verteilergruppen-Paar ein Heizkreis entspricht.

Anstelle eines stirnseitigen Abschlußelemente 34 wird der Einsatz einer in den Zeichnungen nicht dargestellten Verteilergruppe bevorzugt, welches dazu dient, eine Verbindung zwischen der Vorlaufkammer 4 und der Rücklaufkammer 5 an dem einen Ende des Heizungsverteilers herzustellen. Das am anderen Ende des Heizungsverteilers vorgesehene Abschlußelement dient dagegen zum Anschluß der Rohrleitungen für Vorlauf und Rücklauf. Die am Ende des Heizungsverteilers vorzusehende Verteilergruppe mit einem Verbindungskanal zwischen Vorlaufkammer und Rücklaufkammer enthält in ihrem Verbindungskanal ein Überströmventil, das derart eingestellt ist daß eine vorbestimmte Strömung zwischen Vorlaufkammer und Rücklaufkammer vorliegt. Sind alle Ventile des Heizungsverteilers geschlossen, wird bei einem Heizungsverteiler, der an seinem einen Ende ein Abschlußelement für die Rohrleitungen für Vorlauf und Rücklauf und an seinem anderen Ende ein Abschlußelement in Form einer Platte aufweist, das die Vorlauf- und Rücklaufkammer an diesem Ende abschließt, ein Strömungsstillstand in der Vorlaufkammer und der Rücklaufkammer vorliegen, da alle Heizkreise geschlossen sind. Wird in diesem Fall nur ein Heizkreis geöffnet, erfolgt ein erhöhter Durchfluß des Heizmediums durch diesen Heizkreis im Vergleich zu dem Fall, in dem weitere Ventile bzw. Heizkreise ganz oder teilweise geöffnet sind. Damit würde der betreffende Heizkreis in erhöhtem Maße Heizleistung abgeben, auch wenn eine entsprechende Drosselung durch die zugehörigen Ventile vorgenommen ist, was unerwünscht sein kann. Dieser Nachteil wird dadurch vermieden, daß die Verteilergruppe mit in ihrem Verbindungskanal zwischen Vorlaufkammer und Rücklaufkammer befindlichem Überströmventil eine ständige Strömung von der Vorlaufkammer zur Rücklaufkammer ermöglicht, so daß die Strömung auch dann ausgeglichen ist, wenn mit Ausnahme eines Heizkreises die übrigen Heizkreise des Heizungsverteilers geschlossen sind.

Der Aufbau der Verteilergruppe mit Überströmventil läßt sich ohne weiteres auf die Verteilergruppen 1, 2 abstimmen, so daß keine detaillierte Beschreibung der Verteilergruppe mit Überströmventil erforderlich ist.

Nach einer weiteren Abwandlung der Erfindung ist vorgesehen, daß jeweils eine Verteilergruppe 1 (für Vorlauf) und eine Verteilergruppe 2 (für Rücklauf) eine Einheit bilden. Hierbei ist im Gegensatz zu der in Fig. 1 und 4 dargestellten Ausführungsform keine Dichtung 3 zwischen der Verteilergruppe 1 und der Verteilergruppe 2 vorgesehen, da die Verteilergruppe 1 und die Verteilergruppe 2 ein Teil bzw. eine Einheit bilden. Bei dieser Ausführungsform eines Heizungsverteilers ist eine gleiche Zahl von auf die Vorstehend beschriebene Weise gebildeten Einheiten notwendig wie Heizkreise vorliegen.

Zusätzlich zu den Ventilen können Entlüftungsventile zur Entlüftung der Heizkreise vorgesehen sein, die in den Hohlraum 10 oder 11 (Fig. 1, Fig. 2) eingeschraubt sind. Bei der in Fig. 2 dargestellten Ausführungsform wird das Entlüftungsventil von rechts, d. h. von der dem Kanal 15 abgewandten Seite in die Seitenwand des Hohlraumes 11 eingesetzt.

Die vorstehend beschriebene Ausführungsform, bei der jeweils eine Einheit die Ventile und Anschlüsse für Vorlauf und Rücklauf enthält, und die den unter Bezugnahme auf Fig. 1 und 3 beschriebenen grundsätzlichen Aufbau für den Abschnitt zur Vorlaufregelung entsprechend der Verteilergruppe 1 und den Abschnitt zur Rücklaufregelung entsprechend der Verteilergruppe 2 aufweist, hat den Vorteil, daß die Zahl der Elemente, die zu einem Heizungsverteiler zusammenzusetzen ist, geringer ist, als wenn jeweils eine Verteilergruppe 1 für den Vorlauf und eine Verteilergruppe 2 für den Rücklauf vorgesehen wird und damit eine doppelte Zahl von Elementen den Heizungsverteiler bildet.

**Patentansprüche**

1. Heizungsverteiler, insbesondere für Fußbodenheizungen, bestehend aus einer Vorlaufkammer (4) und einer Rücklaufkammer (5) mit Ventilen und Anschlüssen für den Vorlauf und Rücklauf, bei dem die Anschlüsse für die Heizkreise entlang der unteren Seite ausgebildet sind und wobei Vorlaufkammer und Rücklaufkammer übereinanderliegend angeordnet sind, dadurch gekennzeichnet, daß wenigstens zwei Verteilergruppen (1, 2) vorgesehen sind, daß an der Oberseite jeder Verteilergruppe (1, 2) ein Ventilabschnitt (7, 7') für die Vorlaufregelung bzw. für die Rücklaufregelung ausgebildet ist, und daß jede Verteilergruppe (1, 2) einen Kanal (10, 15) aufweist, der von der Vorlaufkammer (4) über den Ventilabschnitt (7, 7') zum Heizkreisvorlaufanschluß bzw. zum Heizkreisrücklaufanschluß über den Ventilabschnitt (7, 7') zur Rücklaufkammer (5) verläuft.

2. Heizungsverteiler nach Anspruch 1, dadurch gekennzeichnet, daß jede Verteilergruppe (1, 2) in bekannter Weise eine einstückig gefertigte Einheit bildet.

3. Heizungsverteiler nach Anspruch 1 oder 2, dadurch gekennzeichnet, daß die Anschlußstücke (8, 8') für den Vorlauf oder Rücklauf an der dem Ventilabschnitt (7, 7') etwa diametral gegenüber liegenden Seite vorgesehen sind.

4. Heizungsverteiler nach Anspruch 1, dadurch gekennzeichnet, daß die Kanäle (10, 15, 26, 27) im wesentlichen senkrecht zur Längsachse der Vorlauf- bzw. Rücklaufkammer (4, 5) angeordnet sind.

5. Heizungsverteiler nach Anspruch 1, dadurch gekennzeichnet, daß die Kanäle (10, 15, 26, 27) seitlich der Vorlauf- bzw. Rücklaufkammer (4, 5) vorbeilaufend vorgesehen sind.

6. Heizungsverteiler nach Anspruch 1, dadurch gekennzeichnet, daß jeweils zwei der Kanäle (10, 15, 26, 27) im wesentlichen einander gegenüberliegend verlaufen.

7. Heizungsverteiler nach Anspruch 1, dadurch gekennzeichnet, daß die Vorlaufkammer bzw. Rücklaufkammer (4, 5) rohrförmigen Querschnitt haben und daß die Kanäle (10, 15, 26, 27) teilweise in Form eines Halbkreises um die Vorlaufkammer bzw. Rücklaufkammer (4, 5) verlaufen.

8. Heizungsverteiler nach Anspruch 1, dadurch gekennzeichnet, daß in den obenliegenden Ventilabschnitten (7, 7') Ventilsitze (12) ausgebildet sind.

9. Heizungsverteiler nach Anspruch 1, dadurch gekennzeichnet, daß in den Ventilabschnitten (7, 7') Entlüftungsventile vorgesehen sind.

10. Heizungsverteiler nach Anspruch 1, dadurch gekennzeichnet, daß zwischen der Vorlaufkammer (4) und der Rücklaufkammer (5) ein Überströmventil angeordnet ist.

11. Heizungsverteiler nach Anspruch 1, dadurch gekennzeichnet, daß Stellmotoren zur Verstellung der Ventile oberhalb der Ventilabschnitte (7, 7') angeordnet sind.

12. Heizungsverteiler nach Anspruch 9, dadurch gekennzeichnet, daß jeweils ein Entlüftungsventil je Verteilergruppe vorgesehen ist.

**Claims**

1. A heating system distributor, particularly for floor-heating systems, comprising a flow chamber (4) and a return chamber (5), which are provided with valves and with ports for flow and return lines, wherein the ports for the heating circuits are disposed along the underside and the flow chamber and the return chamber are disposed one over the other, characterized in that at least two distributor groups (1, 2) are provided, two valved sections (7, 7') for controlling the flow and the return flow, respectively, are formed at the top of each distributor group (1, 2) and each distributor group (1, 2) comprises a passage (10, 15), which extends from the flow chamber (4) through the valved section (7, 7') to the port for the flow line of the heating circuit or to the return port of the heating circuit via the valved section (7, 7') to the return chamber (5).

2. A heating system distributor according to claim 1, characterized in that each distributor group (1, 2) constitutes in known manner an integrally formed unit.

3. A heating system distributor according to claim 1 or 2, characterized in that the port fittings (8, 8') for the flow and return lines are provided on that side which is approximately diametrically opposite to the valved section (7, 7').

4. A heating system distributor according to claim 1, characterized in that the passages (10, 15, 26, 27) extend substantially at right angles to the longitudinal axis of the flow and return chambers (4, 5).

5. A heating system distributor according to claim 1, characterized in that the passages (10, 15, 26, 27) extend along the sides of the flow and return chambers (4, 5) past the same.

6. A heating system distributor according to claim 1, characterized in that the passages (10, 15, 26, 27) are arranged in pairs of passages which are substantially opposite to each other.

7. A heating system distributor according to claim 1, characterized in that each of the flow and return chambers (4, 5) is tubular in cross-section and the passages (10, 15, 26, 27) extend in part in the configuration of a semicircle about the flow chamber and the return chamber (4, 5) respectively.

8. A heating system distributor according to claim 1, characterized in that valve seats (12) are formed in the valved sections (7, 7') provided at the top.

9. A heating system distributor according to claim 1, characterized in that venting valves are provided in the valved sections (7, 7').

10. A heating system distributor according to claim 1, characterized in that an overflow valve is provided between the flow chamber (4) and the return chamber (5).

11. A heating system distributor according to claim 1, characterized in that servomotors for adjusting the valves are provided above the valved sections (7, 7').

12. A heating system distributor according to claim 9, characterized in that one venting valve is provided for each distributor group.

## Revendications

1. Distributeur de chauffage, notamment pour chauffages de planchers, constitué d'une chambre d'arrivée (4) et d'une chambre de retour (5) avec des soupapes et des raccords pour l'arrivée et le retour, dans lequel les raccords associés aux circuits de chauffage sont réalisés le long de la face inférieure et dans lequel la chambre d'arrivée et la chambre de retour sont disposées l'une au-dessus de l'autre, caractérisé en ce qu'il est prévu au moins deux groupes distributeurs (1, 2), en ce qu'un secteur de soupape (7, 7') est disposé sur la face supérieure de chaque groupe distributeur (1, 2) pour le réglage de l'arrivée ou pour le réglage du retour, et en ce que chaque groupe distributeur (1, 2) comporte un canal (10, 15) qui s'étend de la chambre d'arrivée (4) au raccord d'arrivée du circuit de chauffage, en passant par le secteur de soupape (7, 7'), ou du raccord de retour du circuit de chauffage à la chambre de retour (5), en passant par le secteur de soupape (7, 7').

2. Distributeur de chauffage selon la revendication 1, caractérisé en ce que chaque groupe distributeur (1, 2) constitue, de façon connue, une unité faite d'une seule pièce.

3. Distributeur de chauffage selon la revendication 1 ou 2, caractérisé en ce que les pièces de raccord (8, 8') pour l'arrivée ou le retour sont prévues sur le côté à peu près diamétralement opposé au secteur de soupape (7, 7').

4. Distributeur de chauffage selon la revendication 1, caractérisé en ce que les canaux (10, 15, 26, 27) sont disposés en substance perpendiculairement à l'axe longitudinal de la chambre d'arrivée ou de retour (4, 5).

5. Distributeur de chauffage selon la revendication 1, caractérisé en ce que les canaux (10, 15, 26, 27) sont disposés de façon à longer latéralement la chambre d'arrivée ou de retour (4, 5).

6. Distributeur de chauffage selon la revendication 1, caractérisé en ce que les canaux (10, 15, 26, 27) sont disposés, deux à deux, essentiellement l'un au-dessus de l'autre.

7. Distributeur de chauffage selon la revendication 1, caractérisé en ce que la chambre d'arrivée ou la chambre de retour (4, 5) a une section transversale tubulaire et en ce que les canaux (10, 15, 26, 27) s'étendent partiellement sous la forme d'un demi-cercle autour de la chambre d'arrivée ou de la chambre de retour (4, 5).

8. Distributeur de chauffage selon la revendication 1, caractérisé en ce que des sièges de soupape (12) sont disposés dans les secteurs de soupape sus-jacents (7, 7').

9. Distributeur de chauffage selon la revendication 1, caractérisé en ce que des soupapes de désaération sont prévues dans les secteurs de soupape (7, 7').

10. Distributeur de chauffage selon la revendication 1, caractérisé en ce qu'une soupape de décharge est disposée entre la chambre d'arrivée (4) et la chambre de retour (5).

11. Distributeur de chauffage selon la revendication 1, caractérisé en ce que des servo-moteurs sont disposés au-dessus des secteurs de soupape (7, 7') pour le réglage des soupapes.

12. Distributeur de chauffage selon la revendication 9, caractérisé en ce que chaque groupe distributeur comporte une soupape de désaération.

*Fig.1*

0 052 717

Fig. 2

2

Fig.3

Fig.4

0 052 717

34

35

Fig.5